# EUROPEAN PATENT APPLICATION

(11) **EP 3 292 917 A1**
(43) Date of publication of application: **14.03.2018**
(21) Application number: 16306130.2
(22) Date of filing: 09.09.2016
(51) Int. Cl.: B08B 9/32, B08B 9/42, B65G 29/00, B67C 7/00, B65B 55/10

(54) **RECEPTACLE HANDLING APPARATUS**

(71) Applicant: SIDEL PARTICIPATIONS, 76930 Octeville-sur-Mer (FR)
(72) Inventor: PONGOLINI, Gianluca, 43126 Parma (IT)
(74) Representative: Siloret, Patrick

(57) **Abstract**

There is described a receptacle handling apparatus (6) for handling receptacles (2) comprising at least one retaining assembly (15) adapted to retain one respective receptacle (2) and being moveable between a normal configuration and an overturned configuration at which the retaining assembly (15) retains the receptacle (2) in an overturned orientation, a conveying carousel (16) adapted to advance the retaining assembly (15) and an actuation assembly (17) adapted to actuate movement of the retaining assembly (15) between the normal and the overturned configuration. The receptacle handling apparatus (6) further comprises at least one first interaction element (24) associated to the retaining assembly (15) and at least one second interaction element (25) associated to the actuation assembly (17) and the first interaction element (24) and the second interaction element (25) are adapted to interact with one another for retaining the retaining assembly (15) in the normal or in the overturned configuration.

## Description

### TECHNICAL FIELD

The present invention relates to a receptacle handling apparatus for handling receptacles such as bottles, containers, or the like.

In particular, the present invention relates to a receptacle handling apparatus adapted to overturn the receptacles for cleaning, disinfecting and/or sterilizing the receptacles.

### BACKGROUND ART

It is known in the art to fill any type of pourable food product such as carbonated liquids (e.g. sparkling water, soft drinks and beer), non-carbonated liquids (including still water, juices, teas, sport drinks, wine, etc) and beverages containing pulps into receptacles, such as containers, vessels, jars and bottles made of base components, like glass, plastics, aluminum, steel, and composites.

It is further known in the art that prior to filling the receptacles with the pourable food product, the receptacles must be cleaned, disinfected and/or sterilized. Often the cleaning, disinfection and/or sterilization is done with the receptacles being arranged in an overturned orientation, meaning that the respective inlet/outlet openings face downwards and not upwards as it is the case when being arranged in the normal orientation. The overturned orientation of the receptacles allows to position fluid injection nozzles within the receptacles or to position the inlet/outlet openings over fluid injection nozzles which then inject a fluid agent into the inner of the receptacles. As the receptacles are arranged in the overturned orientation the injected fluid agent automatically drips out of the receptacles due to the acting gravitational forces.

Typically, the cleaning, disinfection and/or sterilization is done by one or more receptacle handling apparatuses.

Such a typical receptacle handling apparatus comprises a carousel-type conveyor adapted to rotate around a respective rotation axis. The receptacle handling apparatus further comprises a plurality of retaining assemblies arranged along the periphery of the carousel-type conveyor and equally spaced angularly around the rotation axis of the carousel-type conveyor.

The retaining assemblies advance along a circular path due to the rotation of the carousel-type conveyor and each one has one respective gripper for retaining one respective receptacle during advancement of the retaining assembly along the path. In particular, each retaining assembly advances along the path through a pick-up station at which each retaining assembly receives one respective receptacle being in an upright orientation and a delivery station at which each retaining assembly releases the respective receptacle in an upright orientation.

Furthermore, the receptacle handling apparatus comprises overturning means adapted to alter the orientation of the receptacles retained by the respective retaining assemblies from the upright orientation at which the respective inlet/outlet openings face upwards to an overturned orientation at which the respective inlet/outlet openings face downwards and vice versa during advancement of the respective retaining assemblies between the pick-up station to the delivery station. Accordingly, overturning means are configured to subject receptacles to 180° rotations around a respective transversal axis. In particular, each retaining assembly moves between a normal configuration at which the retaining assembly retains the respective receptacle in the upright configuration and an overturned configuration at which the retaining assembly retains the respective receptacle in the overturned orientation.

The overturning means comprise a twisted cam structure having a twisted shape (helical design) arranged peripherally adjacent to the carousel-type conveyor and a plurality of actuation assemblies, each one adapted to interact with the twisted cam structure and connected to one respective retaining assembly and the carousel-type conveyor.

Each actuation assembly is designed to actuate movement of the respective retaining assembly between the normal configuration and the overturned configuration. In particular, each actuation assembly comprises a cam follower which runs along the twisted cam structure.

The twisted cam structure is designed in such a manner that each actuation assembly:
- actuates movement of the respective retaining assembly from the normal to the overturned configuration when advancing between the pick-up station and a first intermediate station, the first intermediate station being arranged between the pick-up station and the delivery station along the path,
- keeps the respective retaining assembly in the overturned configuration during advancement of the retaining assembly between the first intermediate station and a second intermediate station, the second intermediate station being positioned between the first intermediate station and the delivery station along the path; and to
- actuate movement of the respective retaining assembly from the overturned to the normal configuration with the respective retaining assembly advancing between the second intermediate station to the delivery station.

It must be noted, that the twisted shape of the twisted cam structure guarantees that the actuation assemblies can actuate the needed movements.

The receptacle handling apparatus further comprises cleaning, disinfecting and/or sterilization means cleaning, disinfecting and/or sterilizing the receptacles when being arranged in the overturned orientation. Thus, the receptacles are cleaned, disinfected and/or sterilized with the respective retaining assembly advancing between the first and the second intermediate station.

Even though such a receptacle handling apparatus performs the required tasks sufficiently well, it comes along with a few drawbacks, especially related to the need of a twisted cam support.

Such a twisted cam support is difficult to produce and needs mainly the intervention of well-trained and skilled workers. Therefore, such a twisted cam support is rather expensive and, thus, significantly increases the overall cost of the receptacle handling apparatus.

Furthermore, the installation of such a twisted cam support must be performed by highly-skilled and qualified personnel too and is lengthy so as to guarantee the needed precision. Thus, also the installation of such a twisted cam structure is rather expensive.

A further drawback comes along with the needed maintenance of the twisted cam support which requires the work of skilled and well-trained personnel. As well, the required maintenance work is rather lengthy in time.

As the number of the skilled and well-trained workers who are able to deal with the needed accuracy the twisted cam structure, any possible failure of the twisted cam structure leading to unplanned maintenance activities lead to possible lengthy interruptions of the overall production as at first, one of the few, skilled and well-trained workers needs to be available for performing the maintenance work.

### DISCLOSURE OF INVENTION

It is therefore an object of the present invention to provide a receptacle handling apparatus to overcome, in a straightforward and low-cost manner, the aforementioned drawbacks.

According to the present invention, there is provided a receptacle handling apparatus as claimed in claim 1.

### BRIEF DESCRIPTION OF THE DRAWINGS

A non-limiting embodiment of the present invention will be described by way of example with reference to the accompanying drawings, in which:
Figure 1 shows a schematic view of a machine having a handling apparatus according to the present invention;
Figure 2 shows a side perspective view of components of the handling apparatus according to the present invention in a first configuration;
Figures 3 to 5 show side views of the components of Figure 2 and illustrate the change from the first configuration to a second configuration; and
Figure 6 and 7 show the same side view of Figures 3 to 5 and illustrate the change of the configuration from the second configuration to the first configuration.

### BEST MODES FOR CARRYING OUT THE INVENTION

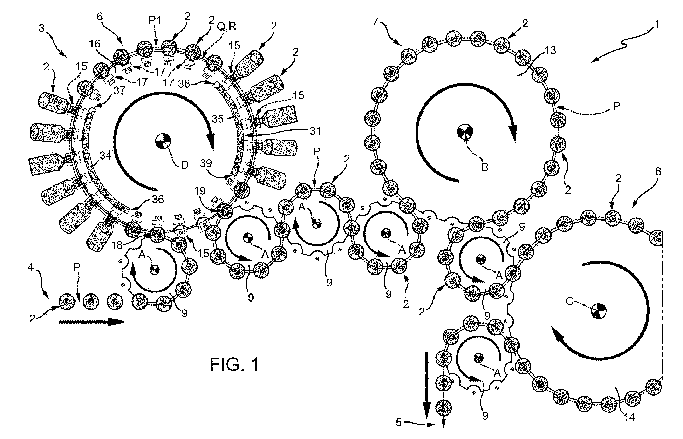

Number 1 in Figure 1 shows as a whole a machine for treating receptacles, in particular machine 1 is adapted to handle, fill and cap bottles 2.

In the following, the description of the example embodiment is based on machine 1 being adapted to handle, fill and cap receptacles such as bottles 2 made of base components such as glass, plastics, aluminum, steel and composite, and suited for any type of pourable product, such as non-carbonated liquids (including still water, juices, teas, sport drinks, liquid cleaners, wine, etc), carbonated liquids (including sparkling water, soft drinks and beer), emulsions, suspensions, high viscosity liquids and beverages containing pulps, which, however, must be understood in a non-limiting manner as also other receptacles such as containers and pre-forms may be treated by machine 1.

In more detail, machine 1 comprises:
- conveying means 3 adapted to advance bottles 2 along a path P from an inlet station 4 to an outlet station 5;
- a receptacle handling apparatus 6 arranged between inlet station 4 and outlet station 5 along path P and adapted to handle bottles 2, in particular being adapted to advance bottles 2 along a portion PI of path P, to overturn bottles 2 during advancement along portion PI and to clean, to disinfect and/or to sterilize bottles 2;
- a filling apparatus 7 arranged downstream of apparatus 6 along path P and adapted to fill bottles 2 with a pourable product; and
- a capping apparatus 8 arranged downstream of apparatus 7 and upstream of station 5 and adapted to close bottles 2.

In more detail, conveying means 3 comprise a plurality of conveying devices, in particular star wheels 9 adapted to convey bottles 2 to or away from one respective apparatus 6, 7 or 8 and each star wheel 9 being adapted to rotate around one respective rotation axis A, in particular rotation axis A having a vertical orientation.

Furthermore, filling apparatus 7 comprises a filling carousel 13 adapted to rotate around a rotation axis B, in particular substantially parallel to axis A, carrying a plurality of filling units (not shown and known as such) and configured to advance the filling units along a relative circular path. Each filling unit is adapted to retain and fill one respective bottle 2 during advancement of the filling unit along the relative circular path, in particular during advancement along an arc-shaped portion of the circular path.

Furthermore, capping apparatus 8 comprises a capping carousel 14 adapted to rotate around a rotation axis C, in particular substantially parallel to axes A and B, carrying a plurality of capping units (not shown and known as such) and configured to advance the capping units along a respective circular path. Each capping unit is adapted to retain and to apply and fasten one respective closure to one respective bottle 2 during advancement of the capping unit along the respective circular path, in particular during advancement along a corresponding arc-shaped portion of the respective circular path.

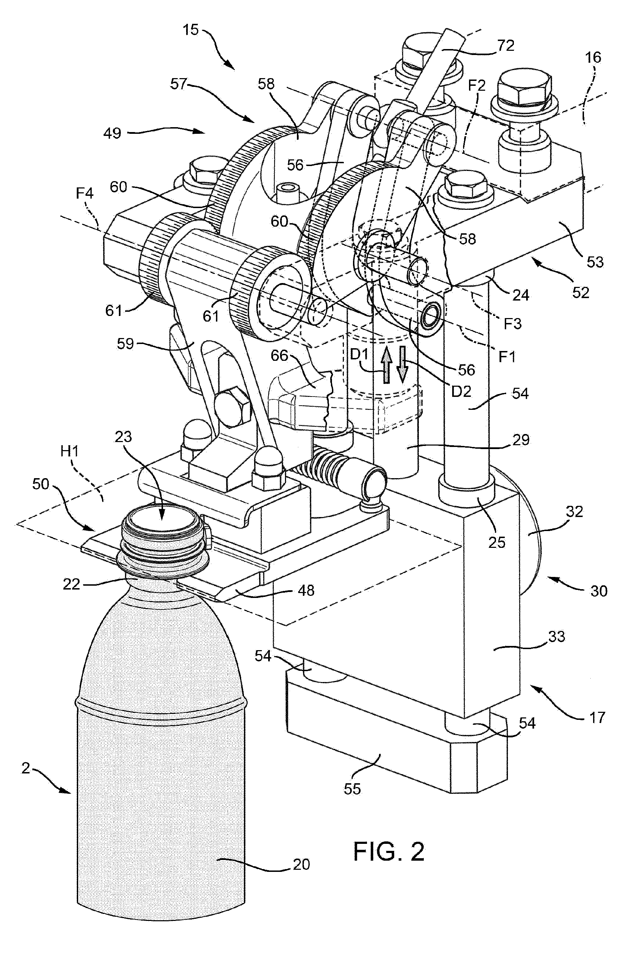

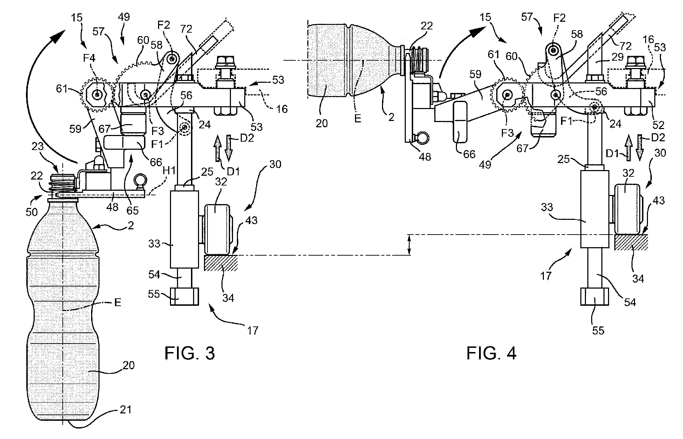

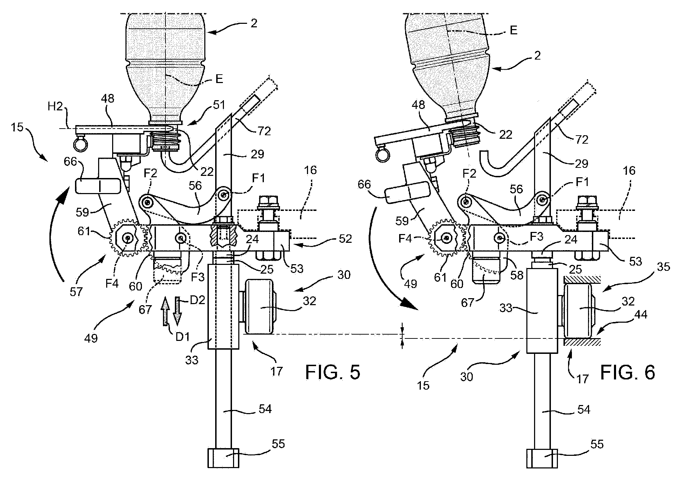

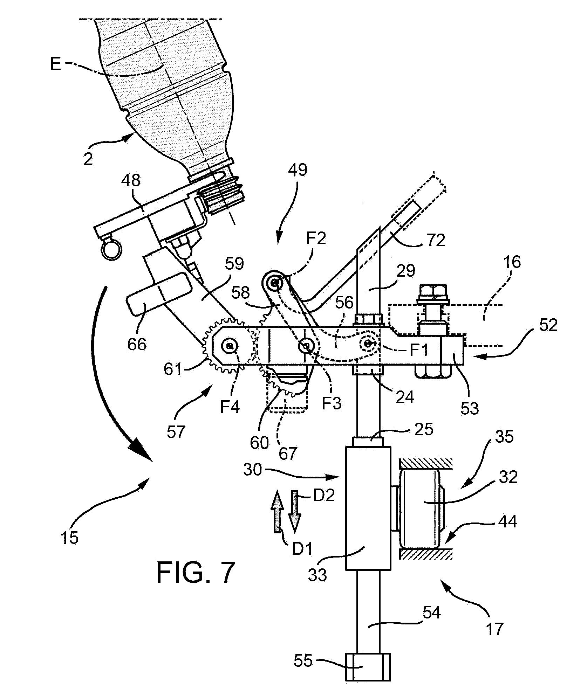

With particular reference to Figures 2 to 7, apparatus 6 comprises:
- a plurality of retaining assemblies 15, each one adapted to retain one respective bottle 2 and being moveable between a normal configuration (see Figures 2 and 3) at which each retaining assembly 15 is configured to retain the respective bottle 2 in an upright orientation and an overturned configuration (see Figure 6) at which each retaining assembly 15 is configured to retain the respective bottle 2 in an overturned orientation;
- a conveying carousel 16 rotatable around a respective rotation axis D, in particular parallel to axes A, B and C, even more particularly having a vertical orientation, carrying retaining assemblies 15 and being adapted to advance through rotation around axis D retaining assemblies 15 along a, in particular circular path Q; and
- a plurality of actuation assemblies 17, each one adapted to actuate movement of one respective retaining assembly 15 between the respective normal and the respective overturned configuration, in particular during advancement of retaining assemblies 15 along path Q.

In more detail, conveying carousel 16 is adapted to advance retaining assemblies 15 along path Q through a pick-up station 18 at which each retaining assembly 15 is designed to receive the respective bottle 2 and a delivery station 19, downstream of station 18 along path Q at which each retaining assembly 15 is designed to release the respective bottle 2.

More specifically, conveying carousel 16 is arranged peripherally adjacent, in particular tangential to one respective star wheel 9 at station 18 and each retaining assembly 15 is configured to receive the respective bottle 2 at station 18 from said respective star wheel 9; and conveying carousel 16 is also arranged peripherally adjacent, in particular tangential to another respective star wheel 9 at station 19 and each retaining assembly 15 is configured to deliver the respective bottle 2 at station 19 to said respective another star wheel 9.

In further detail, each bottle 2 has a longitudinal axis E and comprises a hollow main body 20 bounded by a bottom wall 21 substantially perpendicular to axis E and by a top neck 22 substantially coaxial with axis E. In particular, neck 22 delimits an inlet/outlet opening 23 of bottle 2 opposite to bottom wall 21. Even more particularly, each bottle 2 is designed to be filled with the pourable product through opening 23 and to allow outpouring of the pourable product through the same opening 23. The respective neck 22 of each bottle 2 is adapted to receive a closure (not shown) for sealing bottle 2.

In the upright orientation, each bottle 2 is oriented in such a manner so that the respective opening 23 is arranged above the respective bottom wall 21. In the overturned orientation, each bottle 2 is oriented in such a manner that the respective bottom wall 21 is arranged above the respective opening 23. In both orientations, the respective axis E is substantially vertically oriented. In particular, in the upright orientation each bottle 2 is designed to retain a fluidic product (e.g. the pourable product, liquids etc.) within the bottle 2 itself, and in the overturned configuration of each bottle 2, a fluidic product being introduced into bottle 2 flows/drips out from the respective opening 23 due to gravitational forces.

Furthermore, a bottle 2 being in the upright orientation is turned at an angle of 180° around a transversal rotation axis F4, transversal to the respective axis E with respect to the overturned orientation.

In further detail, in the specific embodiment disclosed in Figures 1 to 7, each retaining assembly 15 is configured to be placed in the respective normal configuration at stations 18 and 19.

Furthermore, each actuation assembly 17 is adapted to move the respective retaining assembly 15 from the normal orientation to the overturned orientation and again from the overturned orientation to the normal orientation during advancement of the respective retaining assembly 15 along path Q, in particular during advancement between stations 18 and 19.

Preferably, each actuation assembly 17 is connected to the respective retaining assembly 15 and advances together with the respective retaining assembly 15 through rotation of carousel 16. In particular, each actuation assembly 17 advances along a path R parallel to path Q.

Thus, each retaining assembly 15 is configured to receive the respective bottle 2 at station 18 with the respective bottle 2 being in the upright orientation and to deliver the respective bottle 2 at station 19 with the respective bottle 2 being in the upright orientation, too. This is, however, in no way intended to limit the scope of protection as defined by the accompanying claims. In alternative embodiments not shown, retaining assemblies 15 could be configured to receive bottles 2 in the upright orientation and to deliver bottles 2 at station 19 in the overturned orientation. Or in an even other embodiment not shown, retaining assemblies 15 could receive bottles 2 at station 18 in an overturned configuration and could deliver bottles 2 at station 19 in an upright configuration.

With particular reference to Figures 2 to 7, apparatus 6 further comprises a plurality of first interaction elements 24, each one associated to one respective retaining assembly 15 and a plurality of second interaction elements 25, each one associated to one respective actuation assembly 17. Furthermore, each interaction element 24 and its respective interaction element 25 are adapted to interact with one another for retaining the respective retaining assembly 15 in the normal or in the overturned configuration, in the specific case shown in Figure 5 in the overturned configuration.

Preferably, as shown in the specific embodiment of Figures 1 to 7, to each retaining assembly 15 is associated at least one pair of interaction elements 24 and to the respective actuation assembly 17 is associated at least one pair of interaction elements 25. In particular, each pair of interaction elements 24 and the respective interaction elements 25 are adapted to retain the respective retaining assembly 15 in the normal or, as shown in particular in Figure 5, in the overturned configuration.

In particular, at least interaction elements 24 or at least interaction elements 25 are defined by one or more magnets, in the specific case shown one magnet, in particular having a ring-shape and interaction elements 25 or interaction elements 24 are of a ferromagnetic or magnetic material. Preferably, both interaction elements 24 and 25 are defined by one or more magnets, in particular having a ring-shape.

With particular reference to Figures 2 to 7, each actuation assembly 17 is configured to place each respective second interaction element 25 at least at a respective first height position (see Figures 2 and 3) at which interaction between the respective interaction elements 24 and 25 is absent or at least weak (i.e. the weak or absent interaction between the respective interaction elements 24 and 25 means that the respective retaining assembly 15 cannot be retained in the normal or overturned configuration) or at a second height position (see Figure 5) at which the interaction between the respective first and second interaction elements 24 and 25 is active so as to retain the respective retaining assembly 15 in the normal or overturned configuration, in the particular case shown in the overturned configuration. In particular, the first height position is lower than the second height position.

In particular, at the first height position of each interaction element 25, interaction element 25 and the respective interaction element 24 are distanced from each other and at the second height position of each interaction element 25, interaction element 25 and the respective interaction element 24 are approached to one another, in particular in such a manner that the forces introduced by the interaction of the respective interaction elements 24 and 25 are sufficient to retain the respective retaining assembly 15 in its normal or, as shown in the specific example embodiment, in the overturned configuration. In the specific example shown, the respective interaction elements 24 and 25 contact each other when the relative interaction elements 25 are at their second positions. Even more specifically, the needed retaining force is generated by magnetic interaction.

In particular, actuation assemblies 17 are adapted to move interaction elements 25 between its first and second positions while concurrently moving the retaining assemblies 15 between the normal and overturned configurations.

Preferably, the height position of each interaction element 24 is fixed.

In more detail, each actuation assembly 17 is configured to be controlled between at least:
- an active state at which each actuation assembly 17 is adapted to move the respective retaining assembly 15 between the respective normal and overturned configurations; and
- a deactivated state at which the actuation assembly 17 is deactivated (i.e. the actuation assembly 17 is passive so as not to induce any further movement/change of the configuration of the respective retaining assembly 15; as well, the actuation assembly 17 does not contribute to retaining the respective retaining assembly 15 in the normal or overturned configuration). In particular, each actuation assembly 17 is configured to be set into a first active sub-state of the respective active state at which the actuation assembly 17 is adapted to actuate movement of the respective retaining assembly 15 from the normal to the overturned configuration; and a second active sub-state of the respective active state at which the actuation assembly 17 is adapted to actuate movement of the respective retaining assembly 15 from the overturned to the normal configuration.

Preferably, each actuation assembly 17 is set in its deactivated state with the respective interaction elements 24 and 25 interacting with one another for retaining the respective retaining assembly 15 in the normal or in the overturned configuration; i.e. the respective retaining assembly 15 is retained in the normal or overturned configuration solely by the interaction between the respective interaction elements 24 and 25.

With particular reference to Figures 2 to 7, each actuation assembly 17 comprises an output member 29, in particular an output bar, coupled to the respective retaining assembly 15 and being adapted to move into a respective direction D1, in particular a rectilinear upwards movement, and a respective counter-direction D2, in particular a rectilinear downwards movement, opposed to direction D1 for actuating movement of the respective retaining assembly 15 between the normal and the overturned configuration. In particular, each actuation assembly 17 is configured to move the respective retaining assembly 15 from the normal to the overturned configuration through movement of output member 29 into direction D1 and to move the respective retaining assembly 15 from the overturned to the normal configuration through movement of the respective output member 29 into the counter-direction D2.

In particular, directions D1 and D2 are parallel to axis D.

Favorably, each actuation assembly 17 further comprises a cam follower 30 connected to the respective output member 29 and being adapted to interact with a cam structure 31 of apparatus 6 for directing the respective output member 29 into direction D1 or into counter-direction D2 during the advancement of the respective retaining assembly 15 along path Q and the respective actuation assembly 17 along path R.

In more detail, each cam follower 30 comprises:
- a wheel element 32 adapted to cooperate, in particular to directly cooperate with cam structure 31 and adapted to follow the cam profile as defined by cam structure 31; and
- a base element 33 carrying the respective wheel element 32 and the respective output member 29 and being configured to indirectly follow the cam profile for moving into direction D1 or counter-direction D2 and to transfer the movement to output member 29.

In particular, each base element 33 carries the at least one respective interaction element 25.

With particular reference to Figures 1 to 7, cam structure 31 is arranged adjacent to carousel 14, in particular cam structure 31 is mounted to a fixed base (not shown and known as such) of carousel 16.

In more detail, cam structure 31 comprises:
- a first active portion 34 at which cam followers 30 interact with cam structure 31 in such a manner so as to move the respective output member 29 into direction D1; and
- a second active portion 35 at which cam followers 30 interact with cam structure 31 in such a manner so as to move output members 29 into counter-direction D2.

Thus, cam structure 31 is designed in such a manner to control actuation assemblies 17, in particular through the respective cam followers 30 so as to move the respective retaining assemblies 15 from the normal configuration to the overturned configuration with retaining assemblies 15 advancing along path R from a first starting station 36 to a first end station 37 downstream of station 36 along path R and so as to move the respective retaining assemblies 15 from the overturned to the normal configuration with retaining assemblies 15 advancing along path R from a second starting station 38 downstream of station 37 along path R to a second end station 39 downstream of station 38 along path R. In particular, the respective cam followers 30 are configured to interact with portion 34 with the respective actuation assemblies 17 advancing, in use, between stations 36 and 37 and to interact with portion 35 with the respective actuation assemblies 17 advancing between stations 38 and 39. I.e. the respective actuation assemblies 17 are controlled in the first active sub-states when advancing between stations 36 and 37 and into the second active sub-states when advancing between stations 38 and 39.

Preferably, the interaction between cam structure 31 and each one of the cam followers 30 is at least inactive or absent with the respective interaction elements 24 and 25 interacting for retaining the respective retaining assembly 15 in the normal or in the overturned configuration; i.e. the interaction between cam structure 31 and cam followers 30 is at least inactive or absent with the actuation assemblies 17 advancing between stations 37 and 38.

With particular reference to Figures 1 to 4, portion 34 substantially extends between stations 36 and 37. Portion 34 comprises an upper surface 43 designed to interact with wheel members 32. In particular, each wheel member 32 is configured to run over surface 43 with the respective actuation assembly 17 advancing between stations 36 and 37.

In more detail, surface 43 has a height profile adapted to guide wheel members 32 from a lower elevation at station 36 to a higher elevation at station 37 so as to move output member 29 into direction D1.

With particular reference to Figures 1, 6 and 7, portion 35 substantially extends between stations 38 and 39. Portion 35 comprises a channel 44 designed to receive and guide wheel members 32. In particular, channel 38 is configured to guide wheel members 32 from the higher elevation at station 38 to the lower elevation at station 39 with actuation assemblies 17 advancing between stations 38 and 39. In use, as wheel members 32 are guided from the higher elevation to the lower elevation the respective output members 29 are moved into counter-direction D2 so as to separate the respective interaction elements 24 and 25.

With particular reference to Figures 2 to 7, each retaining assembly 15 comprises:
- a gripping element 48 adapted to selectively grip one respective bottle 2, in particular at the respective neck 22 in a manner known as such and not further described; and
- a lever mechanism group 49 coupled to the respective output member 29 and carrying the respective gripping element 48 and being movable so as to place the gripping element 48 at a first gripping elevation 50 or at a second gripping elevation 51 distinct from elevation 49 and to, in particular concurrently move the respective gripping element 48 along a semi-circular path (i.e. the respective gripping element 48 changes its orientation at an angle of 180°).

In particular, in the normal configuration of each retaining assembly 15 the respective gripping element 48 is at its first gripping elevation 50 and in the overturned configuration the respective gripping element 48 is at its second gripping elevation 51.

In further detail, each gripping element 48 extends within a first plane H1 when being at the first gripping elevation 50 and each gripping element 48 extends within a second plane H2 parallel to and distinct from plane H1 when being at the second gripping elevation 51. In particular, plane H2 lies above plane H1.

In further detail, each retaining assembly 15 also comprises a support assembly 52 mounted to carousel 16 and at least partially carrying the respective lever mechanism group 49. Each support assembly 52 is further adapted to guide movement of the respective base element 33 of the corresponding actuation assembly 17.

In more detail, each support assembly 52 comprises:
- a base member 53, in particular having a U-like shape mounted to carousel 16, at least partially carrying the respective lever mechanism group 49 and being preferably oriented orthogonal to axis D; and
- at least one support bar 54, in the specific case shown two, mounted to base member 53, adapted to guide movement of the respective base element 33 and, in particular extending parallel to axis D.

Each support assembly 52 further comprises a stabilizing bar 55 connected to and arranged perpendicular to support bars 54.

In even further detail, each support bar 54 extends through one respective through passage (not shown) of the respective base element 33 of the respective actuation assembly 17 so as to guide movement of the respective base element 33. Preferably, the respective output member 29 is interposed between the respective support bars 54.

Favorably, each interaction element 24, 25 has a ring-shape and surrounds one respective support bar 54. In particular, interaction elements 24 contact the respective base member 53.

With particular reference to Figures 2 to 7, each lever mechanism group 49 comprises:
- at least a first lever element 56, in the specifically example shown two, in particular having a L-like shape, pivotally mounted to the respective output member 29 to pivot about a first pivot axis F1 transversal to axis D; and
- a transmission assembly 57 coupled to the respective gripping element 48 and the respective lever elements 56 and adapted to transmit the movement of the respective output member 29 into direction D1 or counter-direction D1 to the respective gripping element 48 so as to move the respective gripping element 48 between the respective elevations 50 and 51, in particular transmission assembly 57 being adapted to transfer movement of the respective element 56.

In further detail, each transmission assembly 57 comprises:
- at least a second lever element 58, in the specific example shown two, pivotally mounted at an end section of element 58 itself to the respective support assembly 52, in particular to an intermediate section of the respective base member 53 to pivot about a second pivot axis F2 parallel to the first pivot axis F1 and pivotally mounted to the respective element 56 to pivot about a third pivot axis F3 parallel to axes F1 and F2;
- at least one third lever element 59, in the specific example shown two, carrying the respective gripping element 48, pivotally mounted to the respective support assembly 52, in particular the respective base member 53 to pivot about a fourth pivot axis F4 parallel to the respective axes F1, F2 and F3; and
- a first coupling element 60, in particular a first gear element, associated to the respective element 58 and a second coupling element 61, in particular a second gear element associated to the respective element 59 and elements 60 and 61 being configured to transfer movement of the respective element 58 to the respective element 59.

Furthermore, each retaining assembly 15 comprises a stop assembly 65 configured to arrest the retaining assembly 15 in its respective normal configuration.

In more detail, each stop assembly 65 comprises at least a stop element 66 and an abutment element 67. More specifically, the respective stop element 66 is mounted to the respective group 49, in particular the respective element 59 and the respective abutment element 67 is mounted to the respective support assembly 52, in particular the respective base member 53. Even more specifically, each abutment element 67 is fixedly mounted to the respective base member 53 and the respective stop assembly 65 is configured to abut to the respective element 67 with the respective retaining assembly 15 being in the normal configuration and to be distanced from element 67 with the respective retaining assembly 15 being in the overturned configuration.

Preferably, handling apparatus 6 also comprises cleaning, disinfection and/or sterilization means adapted to clean, disinfect and/or sterilize the interior of bottles 2 while being retained by retaining assemblies 15, in particular while being oriented in the overturned orientation; i.e. the cleaning, disinfection and/or sterilization means are configured to bottles 2 when, in use, the respective retaining assemblies 15 advance between stations 37 and 38.

In more detail, the cleaning, disinfection and/or sterilization means comprise a plurality of cleaning, disinfection and/or sterilization members, in particular a plurality of injection nozzles 72, each one associated to one respective retaining assembly 15 and each one being adapted to at least partially, clean, disinfect and/or sterilize the respective bottle 2, in particular the interior of the respective bottle 2, even more particularly by injecting a cleaning, disinfection and/or sterilization fluid agent into the interior of bottle 2.

In particular, bottles 2 being oriented in the overturned orientation (i.e. the respective retaining assemblies 15 are set in the overturned configuration), in particular openings 23 are arranged over the respective cleaning, disinfection or sterilization member or, as shown in Figure 5, the respective cleaning, disinfection and/or sterilization member, in particular nozzle 72 is at least partially positioned within the respective bottle 2, in particular through the respective openings 23.

More specifically, each nozzle 72 is mounted to the respective actuation assembly 17, in particular to the respective output member 29 so as to move, in use, together with the respective output member 29.

Thus, each actuation assembly 17 is adapted to concurrently move the respective nozzle 72 between at least an operative position (see Figure 5) at which nozzle 72 is adapted to at least partially clean, disinfect or sterilize the respective bottle 2 and a rest position (see Figures 2 and 3) at which the respective nozzle 72 is detached from the respective bottle 2 while moving the respective retaining assembly 15 between the normal and the overturned configuration. In particular, each actuation assembly 17 is configured to place the respective nozzle 72 at its operative position when setting the respective retaining assembly 15 in its overturned configuration.

The cleaning, disinfection and/or sterilization means also comprise a storage tank providing for the cleaning, disinfection or sterilization fluid agent(not shown and known as such), tubing fluidically connecting the storage tank with the plurality of nozzles 72 and control means for selectively directing the cleaning, disinfection or sterilization fluid to the plurality of nozzles 72.

In use, bottles 2 are advanced along path P from station 4 to station 5. During advancement along path P, in particular along portion PI bottles are cleaned, disinfected and/or sterilized by apparatus 6, filled with a pourable product by apparatus 7 and sealed by apparatus 8.

In particular, at station 18 bottles 2 are fed to respective retaining assemblies 15 and are further advanced along portion PI through movement of carousel 16 and advancement of the respective retaining assemblies 15 along path Q. During advancement of the respective retaining assemblies 15 the bottles 2 are moved from their respective upright orientations to their respective overturned orientations and backwards. Preferably, bottles 2 are cleaned, disinfected and/or sterilized while being arranged in their respective overturned orientations.

In further detail, each retaining assembly 15 advances along path Q through station 18 at which each retaining assembly 15 receives one respective bottle 2, in particular each retaining assembly 15 being in the normal configuration; i.e. the respective bottle 2 is in the upright orientation when received by the respective retaining assembly 15.

During advancement of each retaining assembly 15 between stations 18 and 19 the respective actuation assembly 17 moves the respective retaining assembly 15 from the normal to the overturned configuration and then again from the overturned to the normal configuration. In particular, each actuation assembly 17 actuates movement of the respective retaining assembly 15 from the normal to the overturned configuration while the respective retaining assembly 15 advances from station 36 to station 37 and each actuation assembly 17 actuates movement of the respective retaining assembly 15 from the overturned to the normal configuration while the respective retaining assembly 15 advances from station 38 to station 39. While advancing between stations 37 and 38, each retaining assembly 15 remains in the overturned configuration by interaction of the respective interaction elements 24 and 25 with each other. In particular, while retaining assemblies 15 advancing between stations 37 and 38 the respective bottle 2 is, in particular internally, cleaned, disinfected and/or sterilized.

In even further detail, while each retaining assembly 15 advances along path Q the respective actuation assemblies 17 advance along path R.

While retaining assemblies 15 advance between stations 36 and 37 the respective actuation assemblies 17 actuate movement of the retaining assemblies 15 by the respective output member 29 moving into direction D1, in particular due to interaction of the respective actuation assembly 17 with cam structure 31. Even more particularly, movement of the respective output member 29 into direction D1 is obtained by the respective wheel member 32 running along surface 43 and the change of wheel member 32 from the lower to the higher elevation. This results in the respective base element 33 to move upwards (into direction D1) as does the respective output member 29.

As each lever mechanism group 49 is coupled to the respective output member 29, the respective gripping element 48 is moved from the elevation 50 to elevation 51. In particular, movement of the respective output member 29 leads to the respective element 56 to pivot around the respective axis F1 which results in actuation of the respective transmission assembly 57. In particular, the respective element 58 pivots around axes F2 and F3 and the interaction of the respective coupling elements 60 and 61 couples the movement of the respective element 58 to the pivot movement of the respective element 59 around the respective axis F4. This permits to change the elevation of the respective gripping element 48 and to, in particular concurrently move the respective gripping element 48 along the respective semi-circular path and at the same time the respective bottle 2 is moved from the upright to the overturned orientation. Concurrently, the respective cleaning, disinfection and/or sterilization members, in particular nozzles 72 are controlled from their inactive to their operative positions. More particularly, nozzles 72 are at least partially positioned within the respective bottles 2.

As the respective interaction elements 25 are coupled to the respective base element 33, the respective interaction elements 25 are moved towards the respective interaction elements 24. The interaction between the respective interaction elements 24 and 25 arrests the respective retaining assemblies 15 in the overturned configuration, in particular by preventing movement of the respective output members 29. Thus, each retaining assembly 15 remains in its overturned configuration during advancement between stations 37 and 38 due to the force exerted by interaction elements 24 and 25.

When retaining assemblies 15 advance between stations 38 and 39, the respective actuation assemblies 17 actuate movement from the respective overturned to the respective normal configurations. In particular, the respective wheel members 32 interact with cam structure 31, in particular with portion 35, even more particular with channel 44. The respective wheel members 32 run within channel 44 and move from the higher elevation to the lower elevation which induces movement of the respective output members 29 into counter-direction D2; i.e. output members 29 move downwards. At the same time the respective interaction elements 24 and 25 are distanced from each other. Nozzles 72 are controlled in their inactive positions.

Furthermore, movement of the respective output member 29 into the counter-direction D2 leads to actuation of the respective lever mechanism group 49 which moves the respective gripping element 48 from elevation 51 to elevation 50 and, in particular concurrently gripping element 48 moves back along the respective semi-circular path and, simultaneously, the respective bottle 2 changes from the overturned to the upright orientation.

The advantages of handling apparatus 6 according to the present invention will be clear from the foregoing description.

In particular, an advantage of apparatus 6 is seen in that apparatus 6 can be constructed and maintained more easily with respect to handling apparatuses for overturning receptacles which require a twisted or helical cam mechanism. Indeed, one of the advantages results from the lack of a twisted cam structure.

A further advantage lies in that the cam structure 31 of apparatus 6 requires solely the presence of two active portions 24, 25 which are mechanically separated from each other which facilitates the mounting and the maintenance of the cam structure 31.

Another advantage is the reduced construction and maintenance costs.

An even further advantage lies in relying on magnetic forces for arresting the retaining assemblies 15 in their overturned configurations allowing for a high reliability and neglectable wear.

Clearly, changes may be made to handling apparatus 6 as described herein without, however, departing from the scope of protection as defined in the accompanying claims.

In an embodiment not shown the handling apparatus could be used to solely overturn the receptacles and no cleaning, disinfection or sterilization means would be needed or the cleaning, disinfection and/or sterilization would be performed by apparatuses distinct from and being arranged downstream of the handling apparatus along the path P.

In an even other embodiment not shown, the cleaning, disinfection or sterilization means of the handling apparatus could comprise a plurality of electrodes as cleaning, disinfection and/or sterilization members for sterilizing bottles 2 by means of electron beam technology.

In another alternative embodiment not shown, handling apparatus 6 could comprise an electronic cam mechanism instead of the mechanical cam mechanism disclosed.

In an even other embodiment not shown, interactions 24 or 25 could be defined by respectively portions of the respective support assembly 52 or by respectively a portion of the respective base element 33. In other words, either elements 24 or elements 25 would be integral parts of respectively the corresponding retaining assembly 15 or the corresponding actuation assembly 17.

## Claims

1. Receptacle handling apparatus (6) for handling receptacles (2) comprising:
- at least one retaining assembly (15) adapted to retain one respective receptacle (2) and being moveable between a normal configuration at which the retaining assembly (15) is configured to retain the respective receptacle (2) in an upright orientation and an overturned configuration at which the retaining assembly (15) is configured to retain the respective receptacle (2) in an overturned orientation;
- a conveying carousel (16) rotatable around a rotation axis (D), carrying the at least one retaining assembly (15) and being adapted to advance the at least one retaining assembly (15) along a path (Q); and
- an actuation assembly (17) adapted to actuate movement of the at least one retaining assembly (15) between the normal and the overturned configuration;
the receptacle handling apparatus (6) being **characterized in** comprising at least one first interaction element (24) associated to the retaining assembly (15) and at least one second interaction element (25) associated to the actuation assembly (17); wherein the first interaction element (24) and the second interaction element (25) are adapted to interact with one another for retaining the retaining assembly (15) in the normal or in the overturned configuration.

2. The receptacle handling apparatus according to claim 1, wherein the actuation assembly (17) is configured to be controlled between at least:
- an active state at which the actuation assembly (17) is adapted to move the retaining assembly (15) between the normal and the overturned configuration; and
- a deactivated state at which the actuation assembly (17) is deactivated/passive;
wherein the actuation assembly (17) is set in its deactivated state with the first and the second interaction element (24, 25) interacting with one another for retaining the retaining assembly (15) in the normal or in the overturned configuration.

3. The receptacle handling apparatus according to claim 1 or 2, wherein the actuation assembly (17) is configured to place the second interaction element (25) at least at a first height position or a second height position; wherein the second interaction element (25) and the first interaction element (24) are configured to retain the retaining assembly (15) in the normal or in the overturned configuration with the second interaction element (25) being at the second height position.

4. The receptacle handling apparatus according to any one of claims 1 to 3, wherein the actuation assembly (17) comprises an output member (29) coupled to the retaining assembly (15) and being adapted to move into a direction (D1) and a respective counter-direction (D2) parallel to the rotation axis (D) for actuating movement of the retaining assembly (15) between the normal and the overturned configuration.

5. The receptacle handling apparatus according to claim 3 or 4 further comprises a cam structure (31) adapted to cooperate with the actuation assembly(17);
wherein the actuation assembly (17) further comprises a cam follower (30) connected to the output member (29) and being adapted to interact with the cam structure (31) for directing the output member (29) into the direction (D1) or the counter-direction (D2) during the advancement of the retaining assembly (15) along the path (Q);
wherein the cam structure (31) comprises a first active portion (34) at which the cam follower (30) interacts with the cam structure (31) in such a manner so as to move the output member (29) into the direction (D1); and a second active portion (35) at which the cam follower (30) interacts with the cam structure (31) in such a manner so as to move the output member (29) into the counter-direction (D2);
wherein the interaction between the cam structure (31) and the cam follower (30) is at least inactive or absent with the first interaction element (24) and the second interaction element (35) retaining the retaining assembly (15) in the normal or in the overturned configuration.

6. The receptacle handling apparatus according to claim 5, wherein the second interaction element (25) is coupled to the cam follower (30).

7. The receptacle handling apparatus according to any one of the preceding claims and claim 4, wherein the retaining assembly (15) comprises a gripping element (48) adapted to grip the respective receptacle (2) and a lever mechanism group (49) coupled to the output member (29) and carrying the gripping element (48) and being movable so as to place the gripping element (48) at a first gripping elevation (50) or at a second gripping elevation (51) distinct from the first gripping elevation (50); wherein in the normal configuration of the retaining assembly (15) the gripping element (48) is at its first gripping elevation (50) and in the overturned configuration the gripping element (48) is at its second gripping elevation (51).

8. The receptacle handling apparatus according to claim 7, wherein the lever mechanism group (49) comprises:
- at least one first lever element (56) pivotally mounted to the output member (29) to pivot about a first pivot axis (F1) transversal to the rotation axis (D); and
- at least one transmission assembly (57) coupled to the gripping element (48) and to the at least one first lever element (56) and adapted to transmit the movement of the output member (29) into the direction (D1) or the counter-direction (D2) to the gripping element (48) so as to move the gripping element (48) between the first and the second height position.

9. The receptacle handling apparatus according to claim 8, wherein the transmission assembly (57) comprises:
- at least one second lever element (58) pivotally mounted to a support assembly (52) of the retaining assembly (15) to pivot about a second pivot axis (F2) parallel to the first pivot axis (F1) and pivotally mounted to the first lever element (56) to pivot about a third pivot axis (F3) parallel to the first and the second pivot axes (F1, F2);
- at least one third lever element (59) carrying the gripping element (48), pivotally mounted to the support assembly (52) to pivot about a fourth pivot axis (F4) parallel to the first, the second and the third pivot axis (F1, F2, F3); and
- at least one first coupling element (60) associated to the second lever element (58) and a second coupling element (61) associated to the third lever element (59) and configured to transfer movement of the second lever element (58) to the third lever element (59).

10. The receptacle handling apparatus according to any of claims 7 to 9, wherein the gripping element (48) extends within a first plane (H1) when being at the first gripping elevation (50) and the gripping element (48) extends within a second plane (H2) parallel to and distinct from the first plane (H1) when being at the second gripping elevation (51).

11. The receptacle handling machine according to any one of the preceding claims further comprising at least one cleaning, disinfection and/or sterilization member (72) associated to the retaining assembly (15) and adapted to at least partially clean, disinfect and/or sterilize the respective receptacle (2) retained by the retaining assembly (15); wherein the receptacle (2) is placed over the cleaning, disinfection and/or sterilization member or the cleaning, disinfection and/or sterilization member (72) is at least partially positioned within the respective receptacle (2) with the retaining assembly (15) being in the overturned configuration.

12. The receptacle handling apparatus according to claim 11, wherein the cleaning, disinfection or sterilization member (72) is mounted to the actuation assembly (17);
wherein the actuation assembly (17) is adapted to concurrently move the cleaning, disinfection and/or sterilization member (72) between at least an operative position at which the cleaning, disinfection and/or sterilization member (72) is adapted to at least partially clean, disinfect and/or sterilize the receptacle (2) and a rest position at which the cleaning, disinfection and/or sterilization member (72) is detached from the respective receptacle (2) while moving the retaining assembly (15) between the normal or the overturned configuration;
wherein the actuation assembly (17) is also adapted to place the cleaning, disinfection and/or sterilization member (72) at its operative position when setting the retaining assembly (15) in the overturned configuration.

13. The receptacle handling apparatus according to any one of the preceding claims, wherein at least the first or the second interaction element (24, 25) is magnetic.
